# EUROPÄISCHE PATENTSCHRIFT

(11) **EP 2 942 191 B1**
(45) Veröffentlichungstag und Bekanntmachung des Hinweises auf die Patenterteilung: **12.10.2016**
(21) Anmeldenummer: 14167328.5
(22) Anmeldetag: 07.05.2014
(51) Int. Cl.: B32B 17/00, C08J 5/18, C08L 29/14

(54) **PVB-Folie mit migrationsarmen UV-Schutz**
PVB film with low migration UV protection
Feuille en PVB dotée d'une protection contre les ultraviolets sans migration

(43) Veröffentlichungstag der Anmeldung: 11.11.2015
(73) Patentinhaber: Kuraray Europe GmbH, 65795 Hattersheim (DE)
(72) Erfinder: Lellig, Philipp, Dr, 53840 Troisdorf (DE); Keller, Uwe, Dr., D-53177 Bonn (DE)
(74) Vertreter: Kisters, Michael Marcus

(56) Entgegenhaltungen:
- US-A- 5 618 863

## Beschreibung

### Technisches Gebiet

Die Erfindung betrifft weichmacherhaltige Folien auf Basis von Polyvinylacetal mit UV-Stabilisatoren die eine geringe Migrationsneigung besitzen und damit hergestellte Glaslaminate.

### Stand der Technik

Marktübliche weichmacherhaltige Polyvinylbutyral-Folie (PVB-Folie) für Verbundverglasungen ist seit vielen Jahrzehnten mit UV-Absorbern ausgerüstet, damit UV-Strahlung im Gegensatz zum sichtbaren Licht das Verbundglas nicht vollständig durchdringen kann. Auf diese Weise kann auf einfache Art ein Schutz vor schädigender UV-Strahlung für sich hinter dem Verbundglas befindliche Personen oder Objekte sichergestellt werden. Dies stellt neben dem Schutz vor Schnittverletzungen den wesentlichen Eigenschaftsvorteil gegenüber monolithischem Glas dar, da dieses für UV-Strahlung weitgehend transparent ist.

Besonders bewährt und verbreitet werden als UV-Absorber Abkömmlinge oder Dimere des 2-Hydroxyphenylbenzotriazols verwendet, welche mit verschiedenen Substitutionsmustern z.B. unter den Handelsnamen Tinuvin P, Tinuvin 328, Tinuvin 327, Tinuvin 326, Tinuvin 360 erhältlich sind. So beschreibt US5618863 die Verwendung von Benzotriazolen als UV-stabilisator in PVB-Folien.

Des Weiteren eignen sich als UV-Absorber Abkömmlinge des 2-Hydroxbenzophenons, welche mit verschiedenen Substitutionsmustern z.B. unter den Handelsnamen Mark LA 51, Seesorb 1000, Uvinul 30340, Uvinul 400, Cyasorb UV-24, Uvinul 3008, Chimasorb 125 erhältlich sind.

Außerdem eignen sich als UV-Absorber Abkömmlinge des 2-Hydroxyphenyltriazins, welche mit verschiedenen Substitutionsmustern z.B. unter den Handelsnamen Tinuvin 1577, Cyasorb UV-1164 erhältlich sind.

Verbindungen dieser Art sind in den allgemeinen Formeln 1a, 1b, 2 und 3 skizziert und sind in PVB-Folie für ihre herausragende Langzeitstabilität, gute Löslichkeit und hohe Absorptionsleistung in fast dem gesamten UV-Bereich bekannt. Des Weiteren lassen sich die genannten UV-Absorber auf besonders einfache Weise bei der Extrusion in die Folienmasse einbringen, da sie auch in den üblicherweise verwendeten Weichmachern, wie z.B. 3G8, relativ gut löslich sind und so einfach vor Extrusion dem Weichmacher zugesetzt werden können. Zusätzlich weisen die oben genannten UV-Absorber Schmelzpunkte auf, die wesentlich unter der bei PVB-Folie üblichen Extrusionstemperatur von ca. 200 °C liegen. Begünstigt werden diese Löslichkeits- und Schmelzeigenschaften der genannten UV-Absorber durch deren relativ geringes Molekulargewicht. Dieses, zusammengenommen mit der guten Löslichkeit in der Folienmatrix, führt jedoch auch zu einem hohen Migrationsvermögen in derselben. Besonders im Architekturbereich wird aber einmal verbautes Verbundsicherheitsglas (VSG) unter Umständen erst nach mehreren Jahren ersetzt, so dass bei schleichendem Verlust von UV-Absorber über die offenen Kanten des VSG ein dauerhafter UV-Schutz nicht aufrecht erhalten werden kann.

Das Migrationsvermögen birgt auch nicht nur den Nachteil durch Verlust des UV-Absorbers die damit verbundenen UV-Schutzfunktion zu reduzieren oder ganz zu verlieren. Die Migration des UV-Absorbers ist außerdem von Nachteil, wenn eine UV-Absorber enthaltende Folie in direktem Kontakt mit einer UV-Absorber freien Folie oder einem UV-Absorber freien Material eingesetzt wird. In einer solchen Anordnung kann der migrationsfähige UV-Absorber mit der Zeit in die anfangs UV-Absorber freie Schicht gelangen, diese dadurch schädigen oder unerwünschte Effekte wie Trübung, Verfärbung oder den Verlust einer bestimmten Funktionalität auslösen.

Um die Migration des UV-Absorbers zu reduzieren oder komplett zu verhindern können unlösliche UV-Absorber mit hohem Molekulargewicht oder hohen Schmelztemperaturen, die oberhalb der üblichen Extrusionstemperatur von circa 200 °C liegen, eingesetzt werden. Diese UV-Absorber weisen zwar ein geringeres Migrationsverhalten auf, verursachen aber eine erhöhte Trübung in der Folie, die durch Agglomeration von ungelöstem und ungleichmäßig verteiltem UV-Absorber in der Folienmatrix entsteht.

### Aufgabe

Aufgabe der vorliegenden Erfindung war es, eine gegen UV-Strahlung stabilisierte Klebefolie für Verbundglas bereitzustellen, die eine geringe UV-Transmission, einen niedrigen Gelbwert sowie eine geringe Trübung aufweist und deren UV-Absorber gleichzeitig eine geringe Neigung zu Migration besitzt.

Es wurde gefunden, dass bei Verwendung eines UV-Absorbers in Form eines Salzes, welches von einem organischen UV-Absorber vom Typ 2-Hydroxybenzotriazol (1a,1b), 2-Hydroxybenzophenon (2) oder 2-Hydroxyphenyltriazin (3) abgeleitet ist, eine nach der Lamination trübungsfreie Folie mit geringer UV-Transmission und geringem Gelbwert erhalten werden kann.

Die Abwesenheit von Trübung ist überraschend, da zu erwarten gewesen wäre das Salze in der relativ unpolaren Polymer/Weichmachermischung agglomerieren bzw ungelöst vorliegen und optisch störende Partikel in der Folienmatrix bilden.

### Darstellung der Erfindung

Gegenstand der vorliegenden Erfindung ist daher eine Folie, enthaltend mindestens ein Polyvinylacetal, mindestens einen Weichmacher und 0.01 - 1,5 Gew.% mindestens eines UV-Absorbers ausgewählt aus den Verbindungen der Formeln (1a), (1b), (2) oder (3) 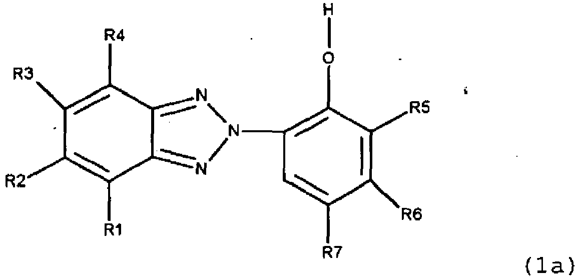 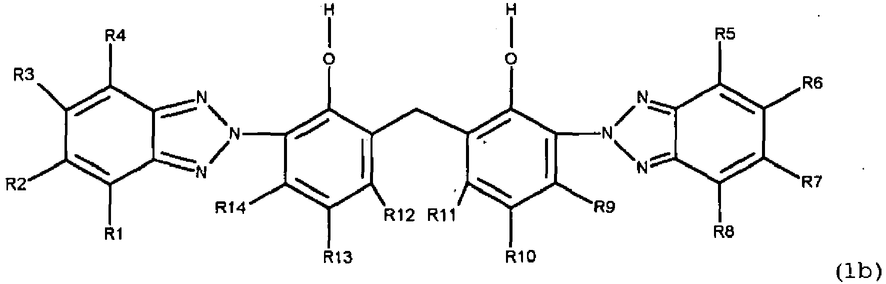 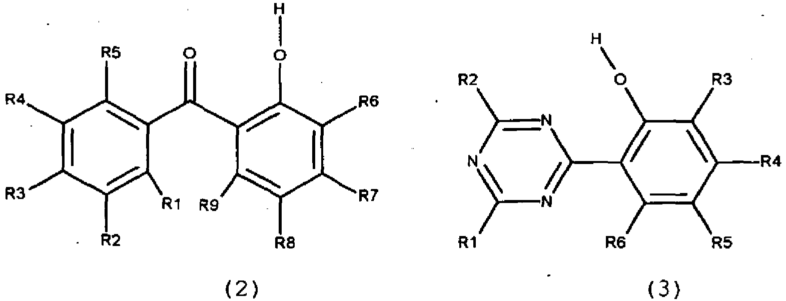 mit R1, R2, R3, R4, R5, R6, R7, R8, R9, R10, R11, R12, R13, R14 = H, Halogenatom, Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert, mit der Maßgabe das mindestens einer der Reste R1, R2, R3, R4, R5, R6, R7, R8, R9, R10, R11, R12, R13, R14 eine Carboxy-, Sulfoxy- oder Phosphatgruppe mit einem Alkali-, Erdalkali- oder Amoniumion als Gegenion trägt.

Bevorzugt werden dabei UV-Absorber gemäß Formel 4 eingesetzt, die von UV-Absorbern vom Typ 2-Hydroxybenzotriazol abgeleitet sind: 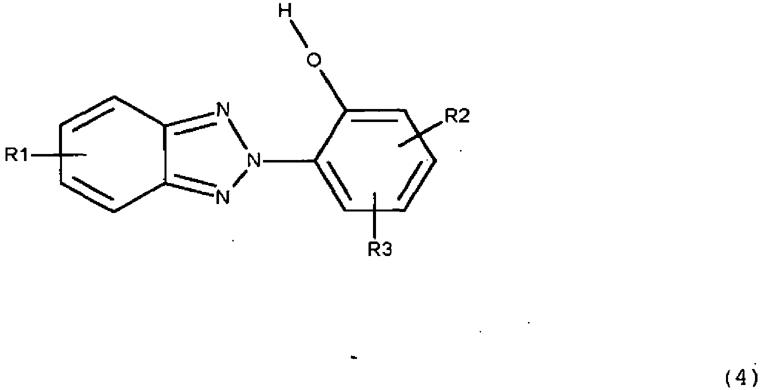 wobei R1, R2 und R3 die genannten Bedeutungen aufweisen

Besonders bevorzugt werden UV-Absorber gemäß Formel 5 eingesetzt, 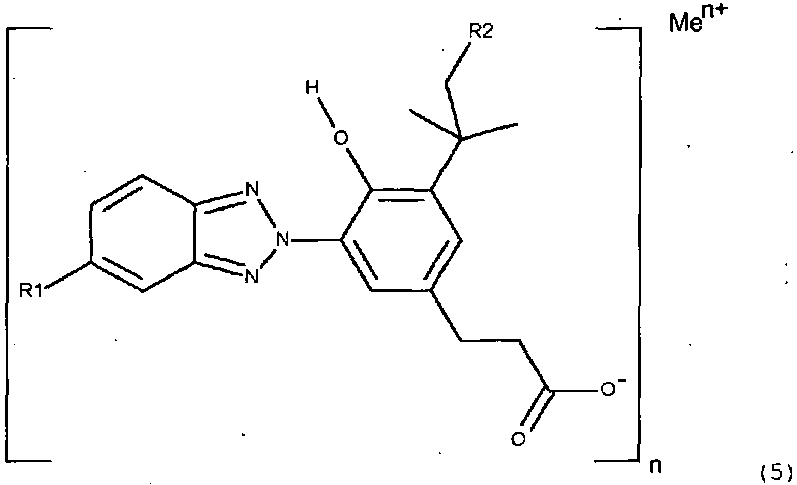 mit R1 = H oder Halogenatom, R2 = H oder CH₃ und Meⁿ⁺ = Li⁺, Na⁺, K⁺, Mg²⁺, Ca²⁺, Zn²⁺, NH₄⁺

Besonders bevorzugt enthalten erfindungsgemäße Folien einen UV-Absorber in Form eines Alkali-, Erdalkali- oder Amoniumsalzes, abgeleitet von der Verbindung 3-(2H-benzotriazol-2-yl)-5-(1,1-dimethyl)-4-hydroxybenzolpropansäure, CAS-Nr. 84268-36-0 oder der, Verbindung 3-(5-chloro-2H-benzotriazole-2-yl)-5-(1,1-dimethyl)-4-hydroxybenzolpropansäure, CAS-Nr. 83573-67-5.

Diese UV-Absorber sind kommerziell z.B. von der Firma Everlight unter dem Handelsnamen Eversorb R01 und Eversorb R04 erhältlich.

Weiterhin ist Gegenstand der Erfindung ein Verfahren zur Herstellung einer wie oben definierten Folie durch Mischen von Polyvinylacetal, mindestens einem Weichmacher und mindestens eines der genannten UV-Absorbers gemäß Formeln 1a, 1b, 2, 3 oder 4 in fester Form in einem Mischaggregat und anschließender Extrusion der erhaltenen Mischung.

Als Mischaggregat können Mischer, Extruder oder Kneter eingesetzt werden. Insbesondere geeignet sind die Extruder, in denen die erhaltene Mischung mittels eines Breitschlitzwerkzeugs zur Folie extrudiert wird. Hier kann die Mischung im vorderen Teil des Extruders stattfinden wobei im weiteren Teil des Extruders das Aufschmelzen und Formgeben erfolgt.

Hierbei kann der in fester Form vorliegende UV-Absorber direkt als Pulver oder Granulat in den Einzugsbereich eines Extruders zugeführt werden. Optional kann der in fester Form vorliegende UV-Absorber auch nach Vormischung mit einem als Pulver oder Granulat vorliegenden Polyvinylacetal zugeführt werden.

Bevorzugt wird der UV-Absorber dem Mischaggregat in einer Trägerflüssigkeit wie dem Weichmacher oder Wasser suspendiert zugeführt.

Erfindungsgemäße Folien enthalten mindestens einen UV-Absorber gemäß Formeln 1a, 1b, 2, 3 oder 4, bevorzugt in einer Menge von 0,01 bis 1,5 Gew.%, besonders bevorzugt in einer Menge von 0,05 bis 0,80 Gew.%, und am meisten bevorzugt in einer Menge von 0,10 bis 0,50 Gew.%.

In einer zweiten Variante der Erfindung enthalten die Folien zusätzlich mindestens ein Antioxidanz in einer Menge von 0,005 bis 0,5 Gew.%.

Die erfindungsgemäß verwendeten UV-Absorber bewirken, das das Folienmaterial einem verringerten Anteil an UV-A Strahlung ausgesetzt wird. Dies kann dazu führen das aus bestimmten Antioxidantien hervorgehende gelbgefärbte Abbauprodukte nicht mehr durch UV-Strahlung gebleicht werden. Bevorzugt werden daher Antioxidantien eingesetzt die solche Abbauprodukte nicht bilden, wie z.B. Antioxidantien die nicht eine Teilstruktur (3,5-di-tert-butyl-4-hydroxyphenyl)propionat bzw. eine Struktur vom. Typ Hostanox 03 beinhalten. Antioxidantien die diese Teilstrukturen enthalten neigen z.T. schon während der Extrusion zur Gelbfärbung.

In einer Variante der Erfindung enthält die Folie weniger als 1500 ppm an Antioxidantien der Formel (6) bzw. mit der Teilstruktur (3,5-di-tert-butyl-4-hydroxyphenyl)propionat oder des Typs Hostanox 03. 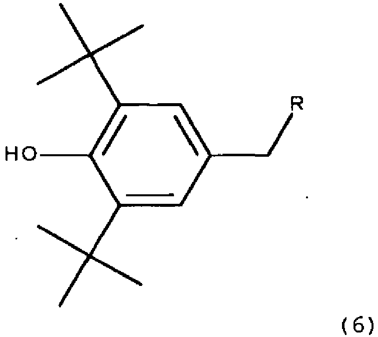 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P,S-substituierte Kohlenwasserstoffreste mit 1 bis 30 Kohlenstoffatomen oder Carbonsäureesterreste mit 1 bis 30 Kohlenstoffatomen in der Alkoholgruppe

Bevorzugt enthält die erfindungsgemäße Folie die genannten Antioxidantien nur in einem geringem Anteil, d.h. bevorzugt nicht mehr als 1000 ppm, bevorzugt zu nicht mehr als 500 ppm, bevorzugt zu nicht mehr als 250 ppm, nicht mehr als 100 ppm, nicht mehr als 50 ppm. Besonders bevorzugt enthält die erfindungsgemäße Folie die genannten Antioxidantien gar nicht, d.h. zu 0 ppm.

Beispielhaft für Verbindungen der Formel (6), die nicht oder nur in den genannten Anteilen eingesetzt werden solche mit den folgenden CAS-Nummern: 2082-79-3, 12643-61-0, 35074-77-2, 23128-74-7, 976-56-7, 65140-91-2, 1709-70-2, 34137-09-2, 27676-62-6, 6683-19-8, 41484-35-9, 991-84-4, 63843-89-0, 4221-80-1, 67845-93-6.

Ebenso beispielhaft für Verbindungen der Formel (6), die nicht oder nur in den genannten Anteilen eingesetzt werden solche gemäß den folgenden Strukturformeln:

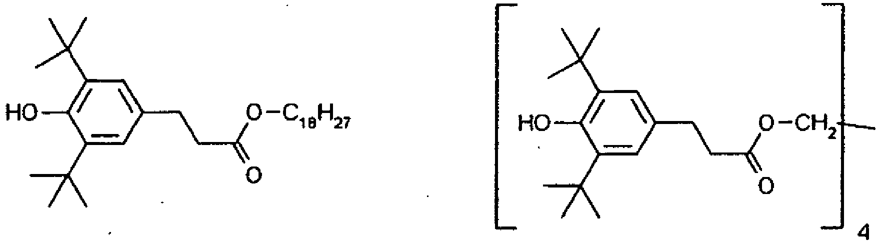

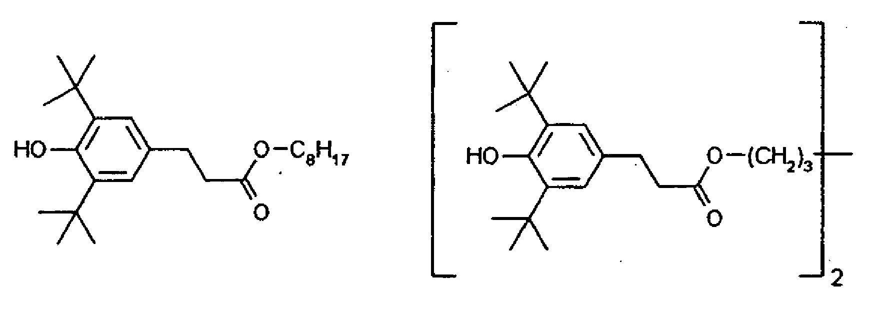

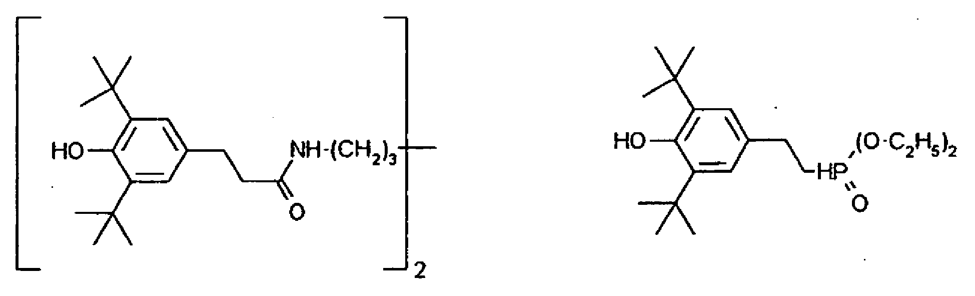

Verbindungen dieser Art sind z.B. im "Plastics Additives handbook" 5th Edition, Hanser-Verlag im Kapitel "Primary antioxidants" zu finden.

In einer vierten Variante der Erfindung können Antioxidantien, welche die Teilstruktur (3,5-di-tert-butyl-4-hydroxyphenyl)propionat oder die Struktur vom Typ Hostanox 03 nicht enthalten, in einer Menge von 0,005 bis 0,5 Gew.%, bevorzugt 0,02 bis 0,15 Gew.% und am meisten bevorzugt 0,03 bis 0,1 Gew.% in der Folie enthalten sein.

Solche geeigneten Antioxidantien sind z.B. Verbindungen der Formel (6) oder zweikernige phenolische Antioxidantien vom Typ Lowinox 44B25 oder Irganox 129, einkernige Antioxidantien vom Typ Songsorb 2908 (CAS: 67845-93-6), BHT (CAS: 128-37-0), p-Octylphenol, mehrkernige wie z.B. Topanol CA (CAS: 1843-03-4) oder Wingstay L (31851-03-3). 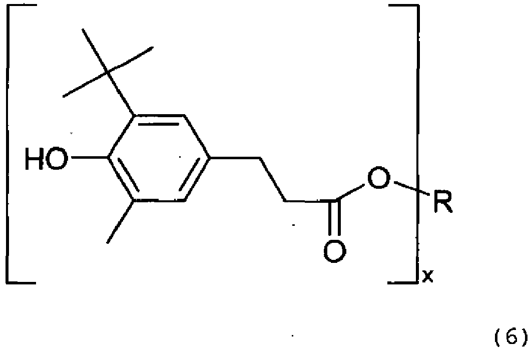 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4

Ebenfalls kommen phenolische Antioxidantien in Betracht, welche ein oder mehrere Schwefelatome enthalten, jedoch die Teilstruktur (3,5-di-tert-butyl-4-hydroxyphenyl)propionat oder die vom Typ Hostanox 03 nicht enthalten.

Antioxidantien gemäß Formel (6) können insbesondere Triethylenglykol-bis-3-(3-tert-butyl-4-hydroxy-5-methylphenyl)propionat, CAS-Nr. 36443-68-2 sein. Dieses ist kommerziell z.B. von Songwon als "Songnox 2450" oder von der BASF SE als "Irganox 245" erhältlich.

Selbstverständlich können durch Variation der Substituenten auf einfache Weise weitere analoge Strukturen generiert werden, welche entsprechend im Rahmen der Erfindung eingesetzt werden können.

Gleichzeitig ist der Gelbwert (db) erfindungsgemäßer Folien kleiner 2, bevorzugt kleiner 1,5, bevorzugt kleiner 1 und bevorzugt kleiner 0,6 und besonders bevorzugt kleiner 0,4. Der Gelbwert (db) der erfindungsgemäßen Folien wird bestimmt an einem Laminat bestehend aus der Folie mit einer Dicke von 0,76 mm zwischen zwei Scheiben Klarglas einer Dicke von 2 mm. Der Farbbeitrag des Glases wird durch Einmessen eines identischen Glaspaares ohne Folie als Referenz herausgemessen.

Die Gelbheit der Folie kann auch durch die Transmission der Folie nach EN 410 bei 430 nm bestimmt werden. Insbesondere weisen erfindungsgemäße Folien daher bei einer Dicke von 0,76 mm in einem Laminat zwischen zwei Scheiben Klarglas (z.B. Planilux) mit jeweils einer Dicke von 2 mm eine Lichttransmission bei 430 nm gemäß EN 410 von größer 75%, besonders bevorzugt von größer 80%, 85%, 86%, 87% oder 88% auf.

Der Gelbwert (db) bzw. die Transmission nach EN 410 bei 430 nm von Folien einer anderen Dicke kann nach schonendem Umformen (z.B. Übereinanderlaminieren von 2 x 0.38 mm, Pressen einer 1.52 mm dicken Folie auf die Dicke 0.76, Abschälen von - bzw. bis zu - der Dicke 0.76) auf die Referenzdicke 0.76 bestimmt werden.

Zusätzlich zur Verwendung geeigneter UV-Absorber und Antioxidantien kann die Einstellung eines geringen Alkalititers der erfindungsgemäßen Folien eine verbesserte Eigenfarbe und photothermische Stabilität der erfindungsgemäßen Folie bewirken.

Der Alkalititer wird, wie in den Beispielen angegeben, durch Neutralisation der erfindungsgemäßen Folie mit Salzsäure bestimmt und liegt bevorzugt zwischen 2 und 70, insbesondere zwischen 3 und 50 und am meisten bevorzugt zwischen 5 und 30.

Die Einstellung des Alkalititers kann durch entsprechende Neutralisation des Polyvinylacetals während oder nach dessen Herstellung durch Acetalisierung von Polvinylalkohol erfolgen oder durch Zugabe von Metallsalzen zur erfindungsgemäßen Mischung. Die Metallsalze fungieren bei der Verwendung der erfindungsgemäßen Folien für Verbundglaslaminate in der Regel auch als Antihaftmittel.

Erfindungsgemäße Folien können als Antihaftmittel Erdalkalimetall-, Zink-, Aluminium- bzw. Alkalimetallionen enthalten. Diese liegen in der Mischung/Folie in Form der Salze von ein- oder mehrwertigen anorganischen oder ein- oder mehrwertigen organischen Säuren vor. Beispiele für Gegenionen sind z.B. Salze organischer Carbonsäuren wie etwa Formiate, Acetate, Trifluoracetate, Propionate, Butyrate, Benzoate, 2-Ethylhexanoate usw., wobei bevorzugt Carbonsäuren mit weniger als 12 C-Atomen, bevorzugt weniger als 8, bevorzugt weniger als 6, bevorzugt weniger als 4 und besonders bevorzugt mit weniger als 3 C-Atomen verwendet werden. Beispiele für anorganische Gegenionen sind Chloride, Nitrate, Sulfate, Phosphate. Weitere Gegenionen können den Tensiden zuzurechnende Anionen sein, wie etwa Sulfonate oder Phosphatische Tenside.

Bevorzugt enthält die erfindungsgemäße Folie mehr als 5 ppm, bevorzugt mehr als 10 ppm, bevorzugt mehr als 15 ppm, bevorzugt mehr als 20 ppm, bevorzugt mehr als 25 ppm Ionen ausgewählt aus der Gruppe Be, Mg, Ca, Sr, Ba, Zink und Aluminium. Um unerwünschte Trübung zu vermeiden, sollten andererseits aber nicht mehr als 250 ppm der genannten mehrwertigen Metalle enthalten sein.

Gleichzeitig ist der Gehalt an Alkalimetallionen (Li, Na, K, Rb, Cs, Fr) in der weichmacherhaltigen, auf Polyvinylacetal basierenden Folie möglichst niedrig einzustellen. Bevorzugt enthält die Folie weniger als 150 ppm, bevorzugt weniger als 100 ppm, bevorzugt weniger als 75 ppm, bevorzugt weniger als 50 ppm, bevorzugt weniger als 25 ppm, bevorzugt weniger als 10 ppm und besonders bevorzugt weniger als 5 ppm Alkalimetallionen.

Die erfindungsgemäß eingesetzten Polyvinylacetale sind als Acetalisierungsprodukte von Polyvinylalkohol (PVA) mit Aldehyden wie Butyraldehyd erhältlich. Erfindungsgemäße Folien können ein oder mehrere Polyvinylacetale enthalten, die sich in Molgewicht, Acetalisierungsgrad, Restalkoholgehalt oder Anzahl der Kohlenstoffatome der Acetalgruppe unterscheiden können.

Zusätzlich zu der Verwendung der UV-Absorber und der Verwendung von nicht zur Vergilbung neigenden phenolischen Antioxidantien können die erfindungsgemäßen Folien mit einem oder mehreren Lichtstabilisatoren, insbesondere mit sterisch gehinderten Aminen vom Typ HALS und/oder sterisch gehinderten Aminoethern (NOR-HALS) ausgerüstet werden.

Erfindungsgemäße Folien enthalten bevorzugt 0,005 - 1 Gew.-%, besonders bevorzugt 0,01 - 0,5 Gew.-%, insbesondere 0,03 - 0,3 Gew.-% und am meisten bevorzugt 0,05 - 0,25 Gew.-% sterisch gehinderte Amine vom HALS oder NOR-HALS Typ als Lichtstabilisatoren.

Verbindungen dieser Art sind kommerziell erhältlich, beispielsweise durch die Produkte Tinuvin 123 (NOR-HALS), Tinuvin 144, Tinuvin 622, Tinuvin 770 sowie dessen Di-N-methyliertes Derivat der BASF (Ciba Specialities). Besonders gut geeignet sind beispielsweise Songlight 2920 der Firma Songwon International, ADK Stab LA-57, LA-52 oder LA-62 der Fa. Asahi Denka Co. oder UVINUL 4050 H der BASF SE.

Zur Herstellung von Polyvinylacetal wird Polyvinylalkohol in Wasser gelöst und mit einem Aldehyd wie z.B. Butyraldehyd, Formaldehyd oder Propionaldehyd unter Zusatz eines Säurekatalysators acetalisiert. Das ausgefallene Polyvinylacetal wird abgetrennt, neutral gewaschen, ggf. in einem alkalisch eingestellten wässrigen Medium suspendiert, danach erneut neutral gewaschen und getrocknet.

Die zur Acetalisierung eingesetzte Säure muss nach erfolgter Reaktion wieder neutralisiert werden. Ein geringer Gehalt an Alkalimetallionen kann unter anderem bei der Synthese des Polyvinylacetals durch Verzicht auf die üblicherweise zur Neutralisation des Katalysators angewandten Natrium- oder Kaliumhydroxide bzw. Carbonate oder durch gründliches Waschen des bei der Acetalisierung erhaltenen Polyvinylacetals erzielt werden. Alternativ zu den Basen NaOH oder KOH, kann die Katalysatorsäure aus dem Acetalisierungsschritt z.B. durch Einblasen von Kohlendioxid oder Ethylenoxid neutralisiert werden.

Der Polyvinylalkoholgehalt des Polyvinylacetals kann durch die Menge des bei der Acetalisierung eingesetzten Aldehyds eingestellt werden.

Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98 Mol% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Polyvinylacetale enthalten neben den Acetaleinheiten noch aus Vinylacetat und Vinylalkohol resultierende Einheiten. Die erfindungsgemäß verwendeten Polyvinylacetale weisen einen Polyvinylalkoholanteil von 12 - 24 Gew.%, bevorzugt von 14 - 23 Gew.%, bevorzugt von 16 - 22 Gew.%, bevorzugt von 17 - 21 Gew.% und insbesondere von 18 - 20 Gew.% auf.

Der Polyvinylacetatgehalt des erfindungsgemäß eingesetzten Polyvinylacetals liegt bevorzugt unter 5 Gew.%, unter 3 Gew.% oder unter 1 Gew.%, besonders bevorzugt unter 0,75 Gew.%, ganz besonders bevorzugt unter 0,5 Gew.% und insbesondere unter 0,25 Gew.%.

Aus dem Polyvinylalkoholanteil und dem Restacetatgehalt kann der Acetalisierungsgrad rechnerisch ermittelt werden.

Bevorzugt weisen die Folien einen Gesamtweichmachergehalt d.h. der Anteil aller Weichmacher in der Folie im Bereich von 5 - 95 Gew.%, 12 - 36 Gew.%, 14 - 32 Gew.%, 16 - 30 Gew.%, insbesondere 20 - 28 Gew.% auf. Erfindungsgemäße Folien bzw. damit verklebte Laminate können einen oder mehrere Weichmacher enthalten.

Gut geeignet als Weichmacher für die erfindungsgemäßen Folien sind eine oder mehrere Verbindungen ausgewählt aus der folgenden Gruppe Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8) Di-2-butoxyethyladipat (DBEA), Di-2-butoxyethoxyethyladipat (DBEEA) Di-2-butoxyethylsebacat (DBES), Di-2-ethylhexylphthalat (DOP), Di-isononylphthalat (DINP) Triethylenglykol-bis-isononanoat, Triethylenglykol-bis-2-propylhexanoat, Tris(2-ethylhexyl)phosphat (TOF), 1,2-Cyclohexandicarbonsäurediisononylester (DINCH), Diisononyladipat (DINA) und Dipropylenglykölbenzoat.

Ganz besonders geeignet als Weichmacher für die erfindungsgemäßen Folien sind Weichmacher, deren Polarität, ausgedrückt durch die Formel 100 x O/(C+H) kleiner/gleich, 9,4 ist, wobei O, C und H für die Anzahl der Sauerstoff-, Kohlenstoff- und Wasserstoffatome im jeweiligen Molekül steht. Die nachfolgende Tabelle zeigt erfindungsgemäß einsetzbare Weichmacher und deren Polaritätswerte nach der Formel 100 x O/(C+H)

| Name Abkürzung 100 x O/(C+H) | |
|---|---|
| Di-2-ethylhexylsebacat (DOS) | 5,3 |
| Di-iso-nonyladipat (DINA) | 5,3 |
| 1,2-Cyclohexandicarbonsäurediisononylester (DINCH) | 5,4 |
| Di-2-ethylhexyladipat (DOA) | 6,3 |
| Dihexyladipat (DHA) | 7,7 |
| Dibutylsebacat (DBS) | 7,7 |
| Triethylenglykol-bis-2-propylhexanoat | 8,6 |
| Triethylenglykol-bis-i-nonanoat | 8, 6 |
| Di-2-butoxyethylsebacat (DBES) | 9,4 |
| Triethylenglykol-bis-2-ethylhexanoat (3G8) | 9,4 |

Weiterhin können die erfindungsgemäßen Mischungen oder Folien zusätzlich weitere Additive, wie zum Beispiel Antistatika, Füllstoffe, IR-Absorbierende Nanopartikel bzw. Chromophore, Farbstoffe, oberflächenaktive Substanzen, Bleichmittel, Stabilisatoren, Säure/Base-Puffer, Chelatbildner, Epoxygruppen enthaltende Verbindungen, Pigmente sowie Haftungsregulatoren enthalten.

Erfindungsgemäße Folien können zur Herstellung von Verbundglas d.h. zum Verkleben von mindestens zwei Glasscheiben oder als eine eine Glasscheibe mit einer weiteren transparenten steifen oder flexiblen Schicht verbindende Lage verwendet werden. Solche Verglasungen können vorteilhaft eingesetzt werden, wo es auf einen guten UV-Schutz bei gleichzeitig hoher Transparenz im sichtbaren Bereich des Lichts ankommt, wie z.B. in Bürogebäuden, öffentlichen Gebäuden wie etwa Schulen, Museen, Schaufensterverglasungen, Kraftfahrzeugen (Windschutzscheiben, Seitenverglasung, Glasdächer und Heckscheiben) oder Flugzeugverglasung. Des Weiteren als VSG Bauteil im Interieurbereich von Bürogebäuden, Restaurationsbetrieben, Badezimmern, Öffentlichen Toiletten usw. Insbesondere können die erfindungsgemäßen Folien auch in Funktionsbauteilen wie Photovoltaikmodulen (besonders für solche mit organischen Solarzellen), Display-Anwendungen (LED oder OLED Bildschirme, Fernseher, Computerbildschirme, Grossbildschirme), schaltbaren Glaselementen (besonders elektrochromen, photochromen, photoelektrochromen, bzw. des Typs "suspended parcticle device" oder Thermotrop) verwendet werden.

In den genannten Funktionsbauteilen schützt mindestens eine Lage der erfindungsgemäßen Folie eine dahinter befindliche aktive Schicht vor Schädigung durch Sonnenlicht bzw. UV-Strahlung. Im Fall photochromer Schichten kann durch Herausfiltern des UV-Anteils der Sonnenstrahlung zusätzlich deren Ansprechverhalten modifiziert werden, was dann stärker vom sichtbaren Licht als von UV-Strahlung beeinflusst wird.

### Prüf- und Messmethoden:

Die strahlungstechnischen Eigenschaften (Lichttransmissionsgrad TL, UV-Transmissionsgrad TUV, jeweils ausgedrückt in %) der zwischen 2 x 2.1 mm Planilux® laminierten Folie in Stärke 0,76 mm wurde gemäß DIN EN 410 (2011) auf einem UV/VIS-Spektrometer Perkin-Elmer Lambda 950 bestimmt.

Zur Bestimmung des Gelbwertes der extrudierten Folie wird ein Verbundglas mit Folie in Stärke 0,76 mm mit zwei Scheiben 2.1 mm Planilux® auf dem ColorQuest XE in Einstellung Hunterlab 2°/C gemessen. Bei dem Verfahren wird die Eigenfarbe des Glases durch Einmessens des Scheibenpärchens der identischen Glascharge als Nullprobe subtrahiert und der Beitrag der Zwischenschicht zur Gelbfärbung als Gelbwert db zahlenmäßig vermittelt.

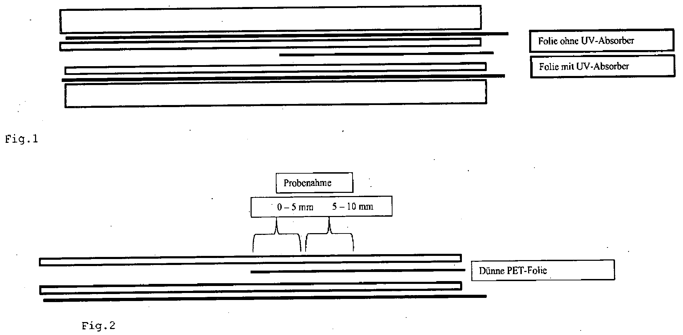

Zum Vergleich des Migrationsverhaltens von UV-Absorbern in PVB-Folie ist das Vorgehen wie folgt:
Es wird eine PVB-Folie in 0.76 mm Dicke mit dem gleichen Weichmacher wie in der Folie, welche den zu untersuchenden UV-Absorber enthält, bereitgestellt. Diese Folie dient als Migrationssenke und ist zunächst frei von UV-Absorber. Dann wird diese Folie und die Folie mit dem zu untersuchenden UV-Absorber wie folgt zu einem Sandwich kombiniert (Figur 1):
   2 mm Glaslage als stützendes Element
   100 - 200 µm dicke PET-Folie als stützendes Element
   Folie ohne UV-Absorber
   ca. 50 µm dünne PET-Folie (z.B. Southwall XIR 75): hälftig Folie mit UV-Absorber
   100 - 200 µm dicke PET-Folie als stützendes Element
   2 mm Glaslage als stützendes Element

Die Gläser und die beiden äußeren Lagen an PET dienen hierbei lediglich dazu, eine normale Verbundherstellung inklusive Autoklavenschritt zu ermöglichen jedoch gleichzeitig eine vereinfachte Probenpräparation durch Abziehen des äußeren PET zu gewährleisten. Durch die hälftige Ausführung der dünnen PET-Folie sind die beiden PVB-Folien in der einen Hälfte des Folienstapels direkt miteinander verklebt während sie in der anderen Seite des Folienstapels durch die dünne PET-Folie separiert sind. Die dünne PET-Folie fungiert hierbei in dieser Hälfte als Migrationssperre für Weichmacher und UV-Absorber. Nach Herstellung eines Vorverbundes in einem industrieüblichen Vakuumbeutel werden die Testlaminate einem üblichen Autoklavenprozess mit einer Gesamtdauer von 90 Minuten, einem Maximaldruck von 12 bar und einer während 30 Minuten gehaltenen Maximaltemperatur von 140 °C unterzogen. Dann werden die Testlaminate zunächst eine ausreichend lange Zeit (z.B. 48h) bei RT gelagert, um ein Wiederausperlen von Luft zu vermeiden. Danach werden die Testlaminate während 4 Wochen in einem Wärmeschrank bei 100 °C gelagert. Hierbei findet die Migration von UV-Absorber aus der diesen enthaltenden PVB-Schicht in die davon freie PVB-Schicht statt. Durch Entnahme einer Folienprobe aus der ursprünglich UV-Absorber-freien PVB-Lage in definiertem Abstand von der Kante der dünnen PET-Folie (0 - 5 mm, Figur 2) und Quantifizierung des eingewanderten UV-Absorbers, lässt sich die Migrationsneigung vergleichend bestimmen. Die Quantifizierung erfolgt mithilfe von gaschromatographischer Analyse oder photometrisch unter Nutzung spezifischer Absorptionsbanden des betreffenden UV-Absorbers.

### Beispiele

Es wurden Folien mit den Mischungen der in den nachfolgenden Tabellen aufgeführten Zusammensetzungen hergestellt und als Laminat zwischen 2 Glasscheiben vom Typ Planilux® der Stärke 2.1 mm verarbeitet und untersucht. Die Extrusionstemperatur lag in allen Fällen bei 200 °C. Bei dem Vergleichsbeispielen 2 konnte der UV-Absorber im Weichmacher gelöst der Extrusionsmischung hinzugefügt werden. Bei Beispiel 1 war der UV-Absorber lediglich im Weichmacher suspendiert.

Der UV-Absorber in Beispiel 1 wurde auf folgende Weise hergestellt: Der kommerziell erhältlich UV-Absorber Eversorb R01 wurde in Ethanol gelöst und mit einer äquimolaren Menge an 0,5 molaren, ethanolischen Kaliumhydroxidlösung versetzt. Das so erhaltene Kaliumcarboxylat, im Folgenden bezeichnet als K-R01, wurde durch Abdampfen des Lösemittels in Pulverform erhalten.

Das Beispiel 1 zeigt im Vergleich zu Vergleichsbeispiel 2 einen sehr günstigen Kompromiss aus geringem Gelbwert und geringer UV-Transmission. Der erfindungsgemäß eingesetzte UV-Absorber neigt viel weniger zu Migration als derjenige aus Vergleichsbeispiel 2. Überraschenderweise wurde zusätzlich auch ein sehr geringer Haze-Wert erhalten, obwohl der erfindungsgemäße UV-Absorber ungelöst als Suspension in dem verwendeten Weichmacher eingesetzt wurde.

### Es bedeuten in der Tabelle

PVB Polyvinylbutyral
3G8 Triethylenglykol-bis-2-ethylhexanoat
DBEA Di-2-butoxyethyladipat (ggf. in Gew-Mischungsverhältnis mit 3G8)
TL Lichttransmission TL nach EN 410 (380 - 780 nm)
db Gelbwert db ermittelt über Colorquest XE
(a) Angaben in Gew% bezogen auf die Folie

**Tabelle 1**

| | **Beispiel 1** | **Vergleich 2** |
|---|---|---|
| UV-Absorber Typ | K-R01 | UVA 328 |
| Dicke der extrudierten Folie | 0,76 mm | 0,76 mm |
| PVB (Mowital F1) | 72,5 | 72,5 |
| Weichmacher 3G8 | 25 | 25 |
| Weichmacher DBEA | 2,5 | 2,5 |
| K-R01 | 0,15 | |
| Tinuvin 328 | | 0,15 |
| Mg-Acetat x 4 H2O | 0,0375 | 0,0375 |
| Irganox 245 | 0,0365 | 0,0365 |
| BHT | 0,05 | 0,05 |
| Lichtdurchlassigkeit TL [EN410] | 89,6 | 91,5 |
| Gelbwert db Colorquest | 0,21 | 0,17 |
| Trübung Haze | 0,15 | 0,12 |
| Transmission-UV (300-380; EN410:2011) in % | 0,60 | 0,33 |
| Gew.-% UVA in Zone 0 - 5 mm | **0,0265** | **0,0684** |
| % UVA relativ zu Ursprungskonzentration in Quellfolie | **18%** | **46%** |

## Patentansprüche

1. Folie, enthaltend mindestens ein Polyvinylacetal, mindestens einen Weichmacher und 0.01 - 1,5 Gew.% mindestens eines UV-Absorbers ausgewählt aus den Verbindungen der Formeln (1a), (1b), (2) oder (3) 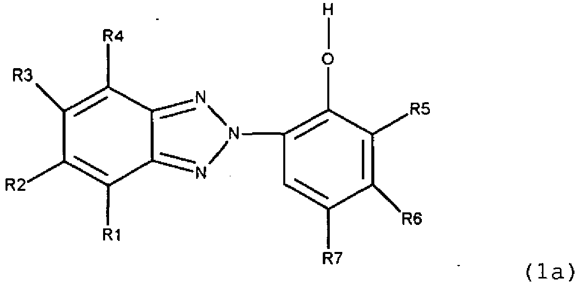 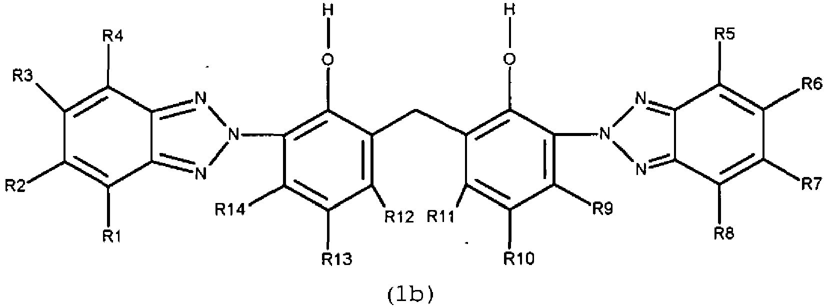 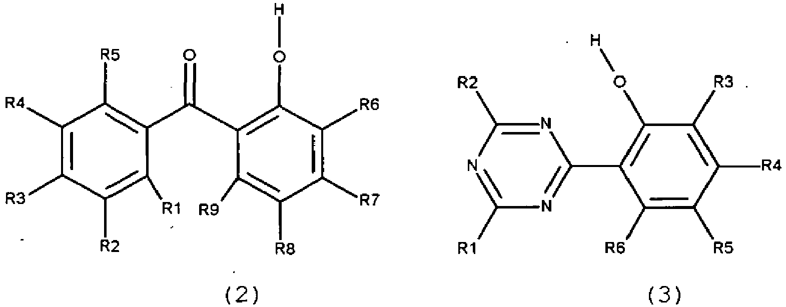 mit R1, R2, R3, R4, R5, R6, R7, R8, R9, R10, R11, R12, R13, R14 = H, Halogenatom, Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert, mit der Maßgabe das mindestens einer der Reste R1, R2, R3, R4, R5, R6, R7, R8, R9, R10, R11, R12, R13, R14 eine Carboxy-, Sulfoxy- oder Phosphatgruppe mit einem Alkali- , Erdalkali- oder Amoniumion als Gegenion trägt.

2. Folie nach Anspruch 1 **dadurch gekennzeichnet, dass** als UV-Absorber Verbindungen der Formel (5) 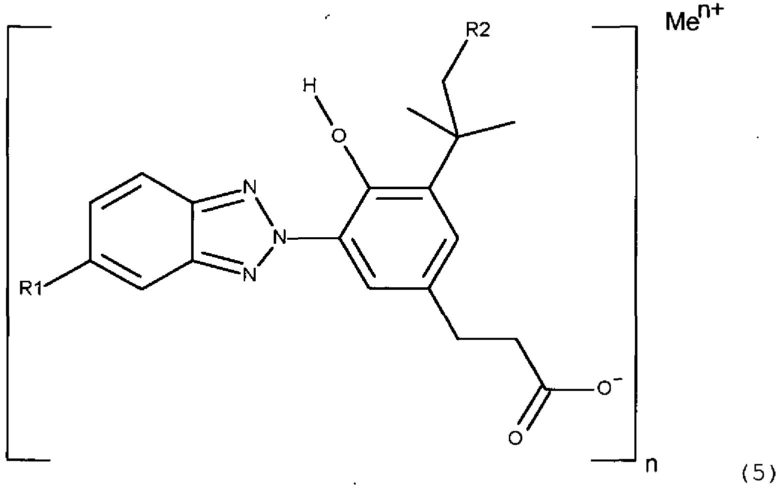 mit R1 = H oder Halogenatom, R2 = H oder CH₃, mit Meⁿ⁺ = Li⁺, Na⁺, K⁺, Mg²⁺, Ca²⁺, Zn²⁺, NH4⁺ eingesetzt werden.

3. Folie nach Anspruch 1 oder 2 **dadurch gekennzeichnet, dass** die Folie weniger als 1500 ppm an Antioxidantien mit der Teilstruktur (3,5-di-tert-butyl-4-hydroxyphenyl)propionat oder gemäß Formel (6) enthält 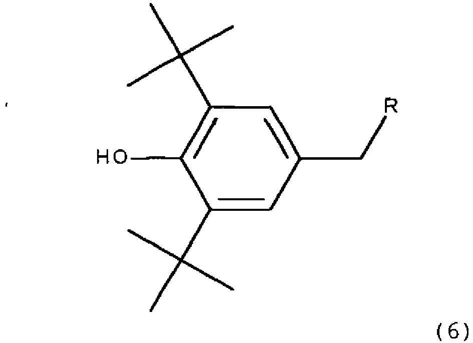 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P,S- substituierte Kohlenwasserstoffreste mit 1 bis 30 Kohlenstoffatomen oder Carbonsäureesterreste mit 1 bis 30 Kohlenstoffatomen in der Alkoholgruppe

4. Folien nach einem der Ansprüche 1 bis 3 **dadurch gekennzeichnet, dass** die Folie einen Gelbwert db von kleiner 2, bestimmt an einem Laminat bestehend aus der Folie mit einer Dicke von 0,76 mm zwischen zwei Scheiben Klarglas einer Dicke von 2 mm, aufweist.

5. Folie nach einem der Ansprüche 1 bis 4 **dadurch gekennzeichnet, dass** die Folien ein oder mehrere Metallionen aus der Gruppe Be, Mg, Ca, Sr, Ba, Zn und Al in einem Anteil von mehr als 5 ppm enthalten.

6. Folie nach einem der Ansprüche 1 bis 5 **dadurch gekennzeichnet, dass** die Folie sterisch gehinderte Amine vom HALS oder NOR-HALS Typ als Lichtstabilisatoren aufweist.

7. Folie nach einem der Ansprüche 1 bis 6 **dadurch gekennzeichnet, dass** das Polyvinylacetal einen Polyvinylalkoholanteil von 12 bis 24 Gew.% aufweist.

8. Verwendung der Folie nach einem der Ansprüche 1 bis 7 Zur Herstellung von Verbundglaslaminaten.

9. Verwendung der Folie nach Anspruche 1 bis 7 zur Herstellung von Museumsverglasung, Schaufensterverglasung, als Kraftfahrzeugverglasung, Flugzeugverglasung, in Photovoltaikmodulen in LED oder OLED Bildschirmen, Fernseher, Computerbildschirme, Grossbildschirme), in elektrochromen, photochromen, photoelektrochromen Glaselementen.

10. Verfahren zur Herstellung einer PVB-Folie nach einem der Ansprüche 1 bis 7 durch Mischen von Polyvinylacetal, mindestens einen Weichmacher und mindestens einem UV-Absorber der Formel 1 in fester Form in einem Mischaggregat und anschließender Extrusion der erhaltenen Mischung.

11. Verfahren nach Anspruch 10 **dadurch gekennzeichnet, dass** der UV-Absorber in einer Trägerflüssigkeit suspendiert dem Mischaggregat zugeführt wird.

## Claims

1. A film, containing at least one polyvinyl acetal, at least one plasticizer and 0.01-1.5% by weight of at least one UV absorber selected from the compounds of formulas (1a), (1b), (2) or (3) 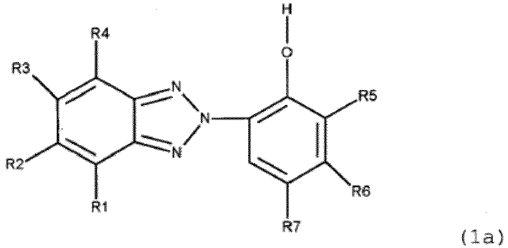 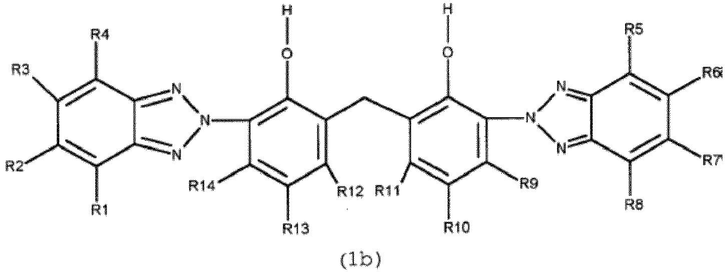 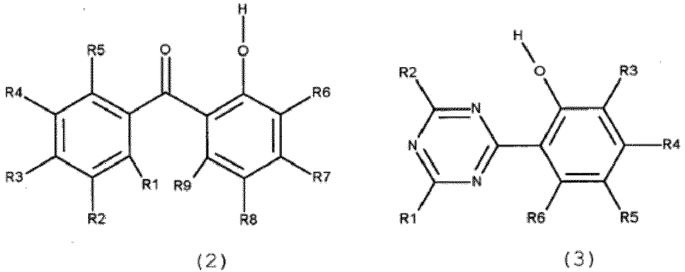 where R1, R2, R3, R4, R5, R6, R7, R8, R9, R10, R11, R12, R13, R14, = H, halogen atom, alkyl, hydroxyalkyl, alkoxyalkyl, acyloxyalkyl moiety with 1 to 20 carbon atoms, each unsubstituted or substituted by aldehyde, keto or epoxy groups, with the provision that at least one of the moieties R1, R2, R3, R4, R5, R6, R7, R8, R9, R10, R11, R12, R13, R14 has a carboxy, sulfoxy or phosphate group with an alkali, alkaline earth or ammonium ion as the counterion.

2. The film according to claim 1, **characterized in that** compounds of formula (5) 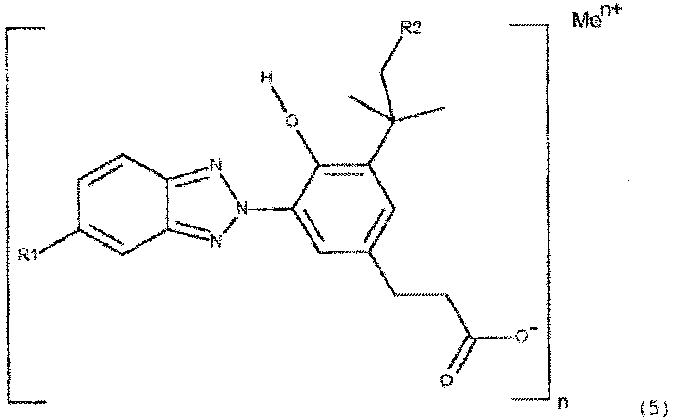 where R1 = H or halogen atom, R2 = H or CH₃, with Meⁿ⁺ = Li⁺, Na⁺, K⁺, Mg²⁺, Ca²⁺, Zn²⁺, NH₄⁺ are used as UV absorbers.

3. The film according to claim 1 or 2, **characterized in that** the film contains less than 1500 ppm of antioxidants with the substructure (3,5-di-tert-butyl-4-hydroxyphenyl) propionate or according to formula (6) 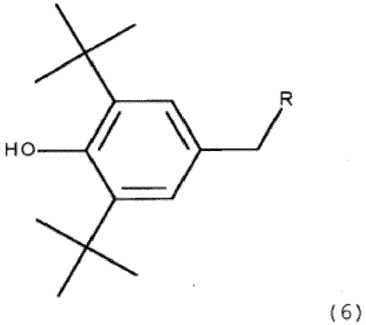 where R = hydrocarbon radical of a polyfunctional alcohol, oligoglycols with 1 to 10 glycol units, hydrocarbon moiety with 1 to 20 carbon atoms, N-, P-and S-substituted hydrocarbon moieties with 1 to 30 carbon atoms or carboxylic acid ester moieties with 1 to 30 carbon atoms in the alcohol group.

4. The films according to any one of claims 1 to 3, **characterized in that** the film has a yellowness index db, determined at 430 nm according to EN 410, of less than 2, determined on a laminate consisting of the film with a thickness of 0.76 mm between two panes of clear glass with a thickness of 2 mm.

5. The film according to any one of claims 1 to 4, **characterized in that** the films contain one or more metal ions from the group Be, Mg, Ca, Sr, Ba, Zn and Al in the amount of more than 5 ppm.

6. The film according to any one of claims 1 to 5, **characterized in that** the film comprises sterically hindered amines of the HALS or NOR-HALS type as light stabilizers.

7. The film according to any one of claims 1 to 6, **characterized in that** the polyvinyl acetal has a polyvinyl alcohol content of 12 to 24% by weight.

8. Use of the film according to any one of claims 1 to 7, for producing composite glass laminates.

9. The use of the film according to claims 1 to 7, to produce museum glazing, display window glazing, automotive glazing, aircraft glazing, in photovoltaic modules in LED or OLED display screens, television sets, computer monitor screens, large-scale screens, in electrochromic, photochromic and photoelectrochromic glass elements.

10. A method for producing a PVB film according to any one of claims 1 through 7, by combining polyvinylacetal, at least one plasticizer and at least one UV absorber of formula 1 in solid form in a mixing apparatus and then extruding the resulting mixture.

11. The method as recited in claim 10, **characterized in that** the UV absorber is suspended in a carrier liquid when supplied to the mixing unit.

## Revendications

1. Feuille contenant au moins un acétal de polyvinyle, au moins un plastifiant et 0,01 à 1,5 % en poids d'au moins un filtre UV choisi parmi les composés de formules (1a), (1b), (2) ou (3) 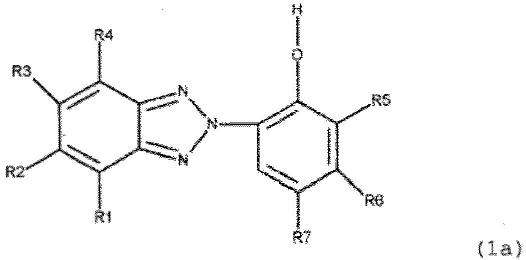 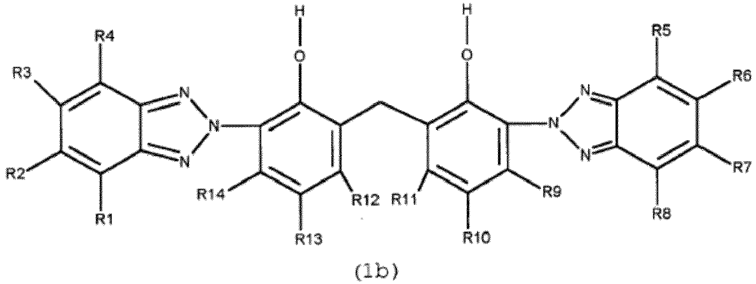 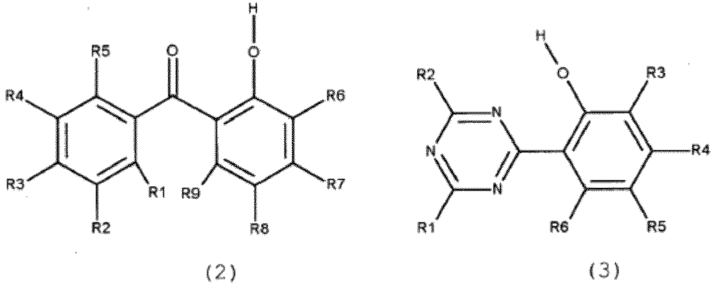 avec R1, R2, R3, R4, R5, R6, R7, R8, R9, R10, R11, R12, R13, R14 = H, atome d'halogène, radical alkyle, hydroxyalkyke, alkoxyalkyle, acyloxyalkyle renfermant 1 à 20 atomes de carbone et pouvant être chacun être non-substitué ou bien substitué avec des groupes aldéhyde, cétone ou époxyde, à condition qu'au moins un des radicaux R1, R2, R3, R4, R5, R6, R7, R8, R9, R10, R11, R12, R13, R14 soit pourvu d'un groupe carboxyle, sulfoxyle ou phosphate dont le contre-ion est un ion alcalin, alcalino-terreux ou ammonium.

2. Feuille selon la revendication 1, **caractérisée en ce que** l'on met en oeuvre, en tant que filtres UV, des composés de formule (5) 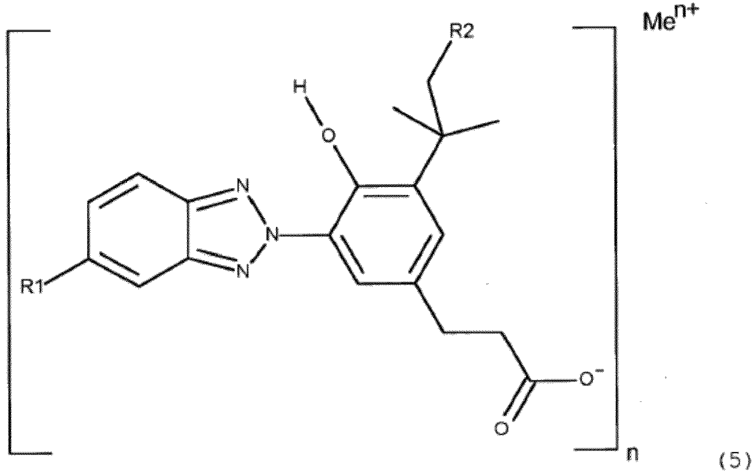 avec R1 = H ou atome d'halogène, R2 = H ou CH₃, avec Meⁿ⁺ = Li⁺, Na⁺, K⁺, Mg²⁺, Ca²⁺, Zn²⁺, NH₄⁺.

3. Feuille selon les revendications 1 ou 2, **caractérisée en ce que** ladite feuille contient moins de 1500 ppm d'antioxydants comportant la structure partielle de proprionate de (3,5-di-tert-butyl-4-hydroxyphényle) ou répondant à la formule (6) 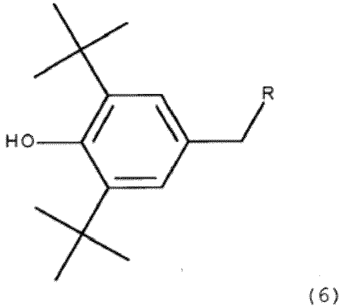 avec R = radical d'hydrocarbure d'un polyol, oligoglycols renfermant 1 à 10 unités de glycol, radical d'hydrocarbure renfermant 1 à 20 atomes de carbone, radicaux d'hydrocarbure pourvus de substituants N,P,S et renfermant 1 à 30 atomes de carbone, ou radicaux d'ester d'acide carboxylique dont le groupe alcool renferme 1 à 30 atomes de carbone.

4. Feuilles selon l'une des revendications 1 à 3, **caractérisées en ce que** ladite feuille présente un indice de jaunissement db inférieur à 2 lorsqu'il est déterminé selon l'EN 410, à 430 nm, sur un élément stratifié qui est constitué de ladite feuille ayant une épaisseur de 0,76 mm et étant disposée entre deux vitres en verre transparent dont chacune présente une épaisseur de 2 mm.

5. Feuille selon l'une des revendications 1 à 4, **caractérisée en ce que** lesdites feuilles contiennent un ou plusieurs ions métalliques issus du groupe Be, Mg, Ca, Sr, Ba, Zn et Al, dans une proportion supérieure à 5 ppm.

6. Feuille selon l'une des revendications 1 à 5, **caractérisée en ce que** ladite feuille comporte des amines stériquement encombrées de type HALS ou NOR-HALS en tant que photostabilisateurs.

7. Feuille selon l'une des revendications 1 à 6, **caractérisée en ce que** ledit acétal de polyvinyle présente une proportion d'alcool polyvinylique comprise entre 12 et 24 % en poids.

8. Utilisation de la feuille selon l'une des revendications 1 à 7 pour fabriquer des éléments de verre feuilleté.

9. Utilisation de la feuille selon les revendications 1 à 7 pour fabriquer des vitrages pour musées, des vitrages pour vitrines, des vitrages pour véhicules à moteur, des vitrages pour avions, dans des modules photovoltaïques, dans des écrans de type LED ou OLED, des téléviseurs, des écrans d'ordinateur, des écrans de grand format, dans des éléments vitrés électrochromes, photochromes, photoélectrochromes.

10. Procédé de fabrication d'une feuille en PVB selon l'une des revendications 1 à 7, consistant à mélanger de l'acétal de polyvinyle, au moins un plastifiant et au moins un filtre UV de formule 1 sous forme solide dans un dispositif de mélange, pour ensuite extruder le mélange ainsi obtenu.

11. Procédé selon la revendication 10, **caractérisé en ce que** ledit filtre UV est introduit dans ledit dispositif de mélange en suspension dans un liquide vecteur.
